(19) Europäisches Patentamt / European Patent Office / Office européen des brevets

(11) **EP 3 748 137 B1**

(12) **FASCICULE DE BREVET EUROPEEN**

(45) Date de publication et mention de la délivrance du brevet:
**31.07.2024 Bulletin 2024/31**

(21) Numéro de dépôt: **20178572.2**

(22) Date de dépôt: **05.06.2020**

(51) Classification Internationale des Brevets (IPC):
*F01K 7/00* *(2006.01)*   *F01K 13/02* *(2006.01)*
*F01K 25/06* *(2006.01)*   *F25B 1/00* *(2006.01)*
*F25B 15/00* *(2006.01)*   *F25B 25/02* *(2006.01)*
*F25B 41/00* *(2021.01)*

(52) Classification Coopérative des Brevets (CPC):
**F25B 25/02; F01K 7/00; F01K 13/02; F01K 25/065; F25B 1/00; F25B 15/00;** F25B 2313/0271; F25B 2400/0401; F25B 2400/075; F25B 2400/141; Y02A 30/27; Y02B 30/62; Y02E 20/14

(54) **SYSTÈME DE CO-PRODUCTION D'ÉNERGIE ÉLECTRIQUE ET D'ÉNERGIE THERMIQUE FROIDE ET PROCÉDÉ ASSOCIÉ**

SYSTEM ZUR GLEICHZEITIGEN ERZEUGUNG VON ELEKTRISCHER ENERGIE UND KALTER WÄRMEENERGIE, UND ENTSPRECHENDES VERFAHREN

SYSTEM FOR CO-PRODUCING ELECTRICAL ENERGY AND COLD THERMAL ENERGY AND ASSOCIATED METHOD

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **06.06.2019 FR 1905984**

(43) Date de publication de la demande:
**09.12.2020 Bulletin 2020/50**

(73) Titulaire: **Commissariat à l'Energie Atomique et aux Energies Alternatives**
**75015 Paris (FR)**

(72) Inventeurs:
- **TAUVERON, Nicolas**
  **38054 Grenoble (FR)**
- **PHAN, Hai Trieu**
  **38054 Grenoble Cedex 09 (FR)**
- **VOELTZEL, Nicolas**
  **38054 Grenoble (FR)**

(74) Mandataire: **Hautier IP**
**20, rue de la Liberté**
**06000 Nice (FR)**

(56) Documents cités:
WO-A1-2016/004414      AT-A4- 511 823
DE-A1- 102006 060 836      US-A1- 2005 086 971

# Description

## DOMAINE TECHNIQUE

L'invention concerne le domaine des systèmes thermodynamiques, et procédés associés, pour la coproduction d'énergie électrique et d'énergie thermique. Elle trouve pour application particulièrement avantageuse le domaine des systèmes stationnaires à partir de source chaleur à basse température telle que des rejets thermiques de procédés industriels, le solaire thermique, la biomasse, la géothermie, des turbines à gaz. L'invention peut également trouver des applications dans le domaine des véhicules que ce soient des véhicules à moteur thermique ou bien à moteur hybride ayant un besoin d'énergie thermique et d'électricité.

## ETAT DE LA TECHNIQUE

On connait de la publication Gokmen Demirkaya, Ricardo Vasquez Padilla, Armando Fontalvo, Yee Yan Lim. Thermal and Exergetic Analysis of the Goswami Cycle Integrated with Mid-Grade Heat Sources. August 2017Entropy 19(8):416. DOI: 10.3390/e19080416, un cycle de coproduction d'électricité et de froid avec échangeur interne. Le cycle combine un cycle de Rankine et un cycle de production de froid par absorption. Les différents organes des deux cycles sont agencés en série sur un circuit fluidique fermé.

Le dispositif décrit dans cette publication ne permet pas de faire varier les conditions de production d'électricité et de froid. La production de froid et la production d'électricité sont toujours simultanées.

Or, les politiques énergétiques actuelles posent le problème de la gestion de la fluctuation ou de l'intermittence des sources, mais aussi de la maitrise de la variabilité des pics de demande énergétique et cela tout en valorisant des sources de chaleur de bas niveau thermique tel que le solaire thermique, les chaleurs fatales. Il est donc demandé aux installations de production d'énergie de répondre à ces problématiques, en particulier le dispositif de l'état de la technique manque clairement de flexibilité de production de ces deux types d'énergie.

Il existe des systèmes combinant une pompe à chaleur à absorption et une pompe à chaleur électrique comme décrits dans la publication de Wu et al. 2018, A novel internally hybrid absorption-compression heat pump for performance improvement, Energy Conversion and Management, Volume 168, 15 July 2018, Pages 237-251. Ces systèmes permettent d'augmenter la production d'énergie thermique par la pompe à chaleur en combinaison avec une autre source de production. La publication décrit des systèmes de pompe à chaleur à absorption assistée d'un compresseur ou bien de pompe à chaleur à compression assistée par un cycle à absorption. Dans ces deux cas, les systèmes ne concernent que la production d'énergie thermique, sans possibilité de produire d'énergie électrique.

On connait du document AT511823A4 un procédé et un dispositif pour générer du froid et/ou de la chaleur utile au moyen d'un cycle d'absorption utilisant une source de chaleur supérieure à la température ambiante et pour une génération supplémentaire d'énergie mécanique ou électrique, grâce à une machine à expansion agencée sur le circuit fluidique entre le générateur et le condenseur. Ce dispositif ne permet pas d'optimiser la production d'énergie thermique notamment il présente une faible flexibilité pour la production de froid.

On connait du document US 2005/086971 un dispositif destiné à permettre avec un seul système le chauffage ou le refroidissement de l'air ambiant et la production d'électricité grâce à un cycle d'absorption et d'un expanseur permettant de produire simultanément du froid et de l'électricité. Ce dispositif ne permet pas d'optimiser la production d'énergie thermique notamment il présente une faible flexibilité pour la production d'électricité.

Le document DE 102006060836 décrit une roue de ventilateur pour un compresseur d'un turbocompresseur à gaz d'échappement ou bien d'une turbine dans les surpresseurs d'air secondaire.

Un objet de la présente invention est donc de proposer un système de coproduction d'énergie électrique et d'énergie thermique qui soit flexible en fonction des besoins d'électricité et de froid, de la disponibilité et du coût des sources d'énergie.

Les autres objets, caractéristiques et avantages de la présente invention apparaîtront à l'examen de la description suivante et des dessins d'accompagnement. Il est entendu que d'autres avantages peuvent être incorporés.

## RESUME

Pour atteindre cet objectif, la présente invention prévoit un système de production d'énergie thermique froide et d'énergie électrique, comme défini par la revendication indépendante 1, comprenant entre autres un dispositif à absorption comprenant un absorbeur, un générateur, un condenseur, un évaporateur et un circuit fluidique d'absorption apte à recevoir une solution de travail comprenant un fluide frigorigène et un absorbant, le circuit fluidique reliant le générateur au condenseur, le condenseur à l'évaporateur, l'évaporateur à l'absorbeur et l'absorbeur au générateur, caractérisé en ce que le système comprend également :

- Un compresseur réversible agencé sur le circuit fluidique entre le générateur et l'absorbeur et en dérivation du condenseur et de l'évaporateur, et configuré pour fonctionner, pendant l'opération du système, alternativement en mode compresseur actionné par un moteur ou en mode expanseur actionnant une génératrice configurée pour produire de l'électricité, le compresseur réversible étant une turbomachine,

- Un module de gestion de la circulation de la solution de travail dans le circuit fluidique de sorte à assurer dans un premier mode de fonctionnement une production d'énergie électrique alternativement avec une production d'énergie thermique froide, et dans un deuxième mode de fonctionnement pour assurer la production d'énergie électrique simultanément à la production de froid.

La présente invention permet d'assurer une flexibilité de la production de froid et d'électricité en fonction des besoins et des sources. L'utilisation d'un compresseur réversible en combinaison avec le module de gestion de la circulation du fluide frigorigène rend le système compact, limitant le nombre de composants et permettant un coût réduit et une intégration possible dans des applications non stationnaires.

L'utilisation d'un compresseur réversible de type turbomachine dans un cycle à absorption est une démarche non commune pour l'homme du métier pour qui se poseraient des problématiques liées au fluide réfrigérant dans le compresseur en mode expanseur. Le compresseur est ainsi adapté à fonctionner alternativement en expanseur relié à une génératrice pour la production d'électricité et en compresseur actionné par un moteur pour comprimer un fluide.

Le compresseur réversible est agencé entre le générateur et l'absorbeur en dérivation du condenseur et de l'évaporateur, c'est-à-dire que le circuit fluidique comprend une ligne de dérivation agencée entre le générateur et l'absorbeur et en parallèle du condenseur et de l'évaporateur et sur laquelle est agencé le compresseur réversible. Cette disposition en dérivation du compresseur réversible permet par l'intermédiaire du module de gestion de la circulation de la solution de travail dans le circuit fluidique de produire de l'électricité et de l'énergie thermique dans de nombreuses combinaisons possibles allant de 100% d'électricité ou 100% d'énergie thermique froide à une proportion plus ou moins importante d'électricité et d'énergie thermique froide, pouvant être avantageusement très basse température. L'utilisation d'un compresseur réversible de type turbomachine permet avantageusement une production électrique de moyenne et grande puissance, avantageusement supérieure à 100KWe (KiloWatt électrique).

En plus, le compresseur réversible est agencé entre l'évaporateur et l'absorbeur, pour permettre notamment la production de froid très basse température.

Un autre aspect de la présente invention concerne un procédé de production d'énergie électrique et d'énergie thermique par un système tel que décrit précédemment, où ce procédé est défini par la revendication indépendante 6, et où il comprend entre autres

- dans le premier mode de fonctionnement alternativement :

  ○ une production d'énergie thermique froide, ou
  ○ une production d'énergie électrique qui se fait par une circulation de la solution de travail dans le circuit fluidique successivement au travers du générateur, du compresseur réversible en mode expanseur associé à une génératrice électrique, de l'absorbeur puis à nouveau dans le générateur, ou

- dans le deuxième mode de fonctionnement simultanément :

  ○ La production d'énergie thermique, froide qui se fait par la circulation de la solution de travail dans le circuit fluidique successivement au travers du générateur, du condenseur, de l'évaporateur, de l'absorbeur puis à nouveau dans le générateur, et
  ○ La production d'énergie électrique qui se fait par la circulation de la solution de travail dans le circuit fluidique successivement au travers du générateur, du compresseur réversible en mode expanseur associé à une génératrice électrique, de l'absorbeur puis à nouveau dans le générateur.

Avantageusement, l'énergie thermique produite dans le premier mode de fonctionnement est du froid, qui se fait par la circulation de la solution de travail dans le circuit fluidique, selon l'alternative, successivement au travers du générateur, du condenseur, de l'évaporateur, de l'absorbeur puis à nouveau dans le générateur.

Avantageusement, dans l'alternative du premier mode de fonctionnement, l'énergie thermique froide produite est du froid très basse température par la circulation de la solution de travail dans le circuit fluidique successivement au travers du générateur, du condenseur, de l'évaporateur, du compresseur réversible en mode compresseur, de l'absorbeur puis à nouveau dans le générateur.

Selon un aspect, l'invention concerne l'utilisation d'un système de production d'énergie thermique et d'énergie électrique tel que décrit ci-dessus pour une production électrique d'une puissance supérieure à 100 kWe.

## BREVE DESCRIPTION DES FIGURES

Les buts, objets, ainsi que les caractéristiques et avantages de l'invention ressortiront mieux de la description détaillée d'un mode de réalisation de cette dernière qui est illustré par les dessins d'accompagnement suivants dans lesquels :

La figure 1 représente un schéma général du système selon l'invention.
La figure 2 représente un schéma du système fonctionnant suivant le premier mode de fonctionnement permettant la production d'énergie thermique froide.

La figure 3 représente un schéma du système fonctionnant suivant le premier mode de fonctionnement permettant la production d'énergie électrique.

La figure 4 représente un schéma du système fonctionnant suivant le deuxième mode de fonctionnement permettant la production d'énergie électrique simultanément à la production d'énergie thermique froide.

La figure 5 représente un schéma du système fonctionnant suivant le troisième mode de fonctionnement permettant la production d'énergie thermique froide très basse température.

La figure 6 représente un graphe de la production de puissance mécanique/électrique par le compresseur réversible en mode expanseur (fonctions B et C) et de froid à l'évaporateur (fonctions A et C) en fonction de la part de production de froid.

La figure 7 représente un graphe du rendement du compresseur réversible en mode expanseur (fonctions B et C) et Coefficient de Performance (COP) de la production de froid (fonctions A et C) en fonction de la part de production de froid.

La figure 8 représente un graphe de la production de froid à différentes températures (fonctions A, D) en fonction de la puissance électrique appelée au compresseur.

La figure 9 représente un graphe de la COP de la production de froid à l'évaporateur (fonctions A, D) en fonction de la puissance électrique appelée au compresseur.

Les dessins sont donnés à titre d'exemple et ne sont pas limitatifs de l'invention. Ils constituent des représentations schématiques de principe destinées à faciliter la compréhension de l'invention et ne sont pas nécessairement à l'échelle des applications pratiques.

## DESCRIPTION DETAILLEE

Avant d'entamer une revue détaillée de modes de réalisation de l'invention, sont énoncées ci-après des caractéristiques optionnelles qui peuvent éventuellement être utilisées en association ou alternativement.

Le circuit fluidique comprend une première ligne de connexion agencée pour assurer la connexion fluidique entre l'évaporateur et le compresseur réversible et une deuxième ligne de connexion pour assurer la connexion fluidique entre le compresseur réversible et l'absorbeur.

Avantageusement, la solution de travail comprend comme fluide réfrigérant de l'ammoniac ($NH_3$) et comme absorbant de l'eau ($H_2O$). De préférence, la solution de travail n'est pas un fluide organique.

Avantageusement, le système comprend au moins un module de stockage de frigories associé à l'évaporateur. Préférentiellement, le module de stockage de frigories est associé à l'absorbeur pour déstocker les frigories.

gories.

Avantageusement, le système comprend au moins un module de stockage de calories associé à l'absorbeur. Préférentiellement, le module de stockage de calories est associé au générateur pour déstocker les calories.

Avantageusement, le système comprend au moins un module de stockage d'électricité associé au compresseur, plus spécifiquement à la génératrice.

Avantageusement, dans le procédé selon le premier mode de fonctionnement, l'énergie thermique produite est du froid très basse température par la circulation de la solution de travail dans le circuit fluidique successivement au travers du générateur, du condenseur, de l'évaporateur, le compresseur réversible en mode compresseur, de l'absorbeur puis à nouveau dans le générateur.

Avantageusement, dans le procédé la température de l'énergie thermique froide, ou froide basse température, produite est comprise entre - 10°C et -25°C ou -10°C et 20°C.

Avantageusement, le procédé comprend une source de chaleur comprenant de la chaleur basse température avantageusement comprise entre 70°C et 150°C.

L'usage de l'article indéfini " un " ou " une " pour un élément ou une étape n'exclut pas, sauf mention contraire, la présence d'une pluralité de tels éléments ou étapes.

Il est précisé que dans le cadre de la présente invention, le terme « agencé sur », ou ses équivalents signifient « en connexion fluidique ».

Dans la présente description, l'expression « A fluidiquement raccordé à B» est synonyme de "A est en connexion fluidique avec B" ne signifie pas nécessairement qu'il n'existe pas d'organe entre A et B. Les expressions "agencée sur" ou "sur" sont synonymes de "raccordé fluidiquement à".

L'amont et l'aval en un point donné sont pris en référence au sens de circulation du fluide dans le circuit.

On entend par échange direct ou couplage direct que l'échange d'énergie thermique se fait directement sans circuit ou composant intermédiaire. L'échange direct dans le condenseur ou l'évaporateur se fait directement entre le fluide frigorigène et par exemple un flux d'air.

Le système de production d'énergie électrique et d'énergie thermique comprend un dispositif à absorption.

Un dispositif d'absorption est une pompe à chaleur réversible à « compression » thermique utilisant des couples réfrigérant/sorbant présentant de fortes affinités afin de remplacer la compression de vapeur des machines traditionnelles. Cette solution présente de faibles consommations électriques, l'énergie principale étant issue de la source thermique, permettant de limiter le coût de fonctionnement dans le cas de la valorisation d'une source d'énergie à bas coût tel que le gaz par exemple ou gratuite (tel que l'énergie solaire ou le rejet de chaleur par exemple). De plus, les fluides frigorigènes utilisés dans les dispositifs à absorption ne présentent aucun impact environnemental : ni sur le réchauffement climatique (GWP pour Global warning potential = 0) ni sur la couche d'ozone (ODP pour Ozone depletion potential = 0).

Ce type de dispositif fonctionne grâce à la faculté de certains liquides d'absorber (réaction exothermique) et de désorber (réaction endothermique) une vapeur. Elles utilisent également le fait que la solubilité de cette vapeur dans le liquide dépend de la température et de la pression. Ainsi, ces dispositifs utilisent comme solution de travail un mélange binaire, dont l'un des composants est plus volatil que l'autre, et constitue le fluide frigorigène.

Un dispositif à absorption est donc composé de 4 échangeurs principaux (générateur 1, absorbeur 4, condenseur 2 et évaporateur 3), et avantageusement de un à trois échangeurs secondaires. Le rôle des trois échangeurs secondaires est d'améliorer les performances de la machine telles que : un rectifieur 13, un économiseur 8, un sous-refroidisseur 6. Selon une possibilité, le dispositif à absorption comprend au moins une vanne de détente 12, et au moins une boucle à solution 11 comprenant une pompe à solution 9 et une vanne de détente 10. Ce type de dispositif fonctionne selon trois niveaux de température : un niveau de température basse correspondant à la production de froid à l'évaporateur 3, un niveau de température intermédiaire correspondant à la température de condensation du fluide frigorigène, mais également à celle d'absorption du fluide frigorigène par l'absorbant et un niveau de température élevé correspondant à la température motrice du générateur 1.

La machine à absorption comprend un circuit fluidique à absorption 100 configuré pour assurer la connexion fluidique des différents composants de la machine à absorption. Le circuit fluidique à absorption 100 est un circuit fermé destiné à recevoir la solution de travail.

Un dispositif à absorption fonctionne pour une part à haute pression entre la pompe 9 en amont du générateur 1 et le détendeur 12, en aval du condenseur 102, et pour une autre part à basse pression entre le détendeur 12, en aval du condenseur 102 et la pompe 9 en amont du générateur 101.

Ce cycle thermodynamique est réalisable en raison de l'écart de pression de vapeur entre l'absorbant et le fluide frigorigène qui est variable en fonction de la température et de la pression. Cette variabilité permet d'avoir un écart de concentration entre la solution pauvre et la solution riche décrites ci-après. L'avantage de ce cycle à absorption est que la compression mécanique est remplacée par une compression thermochimique qui utilise de la chaleur, c'est-à-dire une source d'énergie primaire dégradée. Le seul apport d'énergie primaire nécessaire se situe au niveau de la pompe à solution, mais son travail est environ 96 fois inférieur au travail que le compresseur de vapeur doit fournir pour des conditions de fonctionnement similaires.

Selon l'invention, la centrale comprend une solution de travail fluide frigorigène/absorbant comprenant selon une possibilité le couple Ammoniac/Eau (NH3/H2O). Les concentrations du fluide de travail et de l'absorbant dans la solution de travail sont adaptées à la pression et la température du traitement d'air et inférieures à la concentration de cristallisation de la solution. Selon une autre possibilité, la solution de travail comprend des liquides ioniques.

Ce couple NH3/ H2O est utilisable pour des applications de climatisation, mais aussi de réfrigération et il n'y a pas de cristallisation possible sur les plages de fonctionnement en pression et température. Par contre, pour ce couple, l'écart de pression de vapeur entre l'absorbant et le fluide frigorigène est faible. Il y a donc des traces d'eau emmenées avec la vapeur d'ammoniac en sortie du générateur 1 nécessitant parfois la présence d'un rectifieur 13.

La solution de travail est dite riche, car la concentration en fluide frigorigène est plus importante que dans la solution de travail dite pauvre.

Le système selon l'invention comprend :

- Un générateur 1 configuré pour vaporiser le fluide frigorigène. Le générateur 1 est connecté fluidiquement à l'absorbeur 4 et au condenseur 2. Le générateur 1 est raccordé fluidiquement à l'absorbeur 4 par une connexion fluidique 100 et plus précisément avec l'économiseur 8 décrit ci-après permettant l'entrée de la solution de travail dite riche dans le générateur 1. Le générateur 1 est raccordé fluidiquement à l'absorbeur 4 par une connexion fluidique 101 et plus précisément avec l'économiseur 8 décrit ci-après permettant la sortie de la solution de travail dite pauvre hors du générateur 1. L'économiseur 8 étant lui-même avantageusement connecté fluidiquement par une connexion fluidique 102 à un détendeur 10 permettant de détendre la pression de la solution de travail dite pauvre avant qu'elle soit transmise à l'absorbeur 4 par une connexion fluidique 103. Le générateur 1 est raccordé fluidiquement au condenseur 2 par une connexion fluidique 104 permettant la sortie de la vapeur de fluide frigorigène hors du générateur 1. Le générateur 1 comprend également une entrée et une sortie de source chaude 14 permettant l'apport de chaleur nécessaire à la vaporisation du fluide frigorigène. Selon une possibilité de l'invention, la circulation de la source de chaleur ou source chaude 14 dans le générateur 1 est contrôlée par un circuit de stockage et de contrôle comprenant par exemple une pompe, une vanne trois voies assurant la recirculation de la source chaude 14 si sa température en sortie du générateur 1 est supérieure à une valeur seuil et un organe de stockage tel une cuve.

Avantageusement, le dispositif à absorption comprend un rectifieur 13 disposé entre le générateur 1 et le condenseur 2, plus précisément sur la connexion fluidique 104. Le rectifieur 13 permet d'enlever par condensation les traces d'eau entraînées avec le fluide du dispositif. Selon une possibilité, le rectifieur 13 comprend une source froide 19. Avantageusement, la source froide 19 est la solution de travail dite "riche" en sortie de la pompe 9 de la boucle de solution 11.

Le système selon l'invention comprend en plus :

- Un condenseur 2 configuré pour condenser la vapeur de fluide frigorigène. Le condenseur 2 est connecté fluidiquement au générateur 1 et à l'évaporateur 3. Le condenseur 2 est raccordé fluidiquement au générateur 1 par une connexion fluidique 104 permettant l'entrée de la vapeur de fluide frigorigène dans le condenseur 2. Le condenseur 2 est raccordé fluidiquement à l'évaporateur 3 par une connexion fluidique 105, plus précisément avec un détendeur 12, permettant la sortie du fluide frigorigène à l'état liquide. Le condenseur 2 comprend également une source de refroidissement tel qu'une circulation d'air 16 pour assurer son fonctionnement normal. Le changement de phase du fluide frigorigène de l'état vapeur à l'état liquide s'accompagne d'une libération de chaleur qui est transmise par exemple au flux d'air circulant 16. L'air réchauffé est évacué du système.

Le système comprend un détendeur 12 agencé entre le condenseur 2 et l'évaporateur 3. Le détendeur 12 est configuré pour détendre le fluide frigorigène à l'état liquide issu du condenseur 2. Le détendeur 12 amène le fluide frigorigène à sa pression d'évaporation.

Avantageusement, le dispositif à absorption peut comprendre un sous-refroidisseur 6 agencé entre le condenseur 2 et l'évaporateur 3, et entre l'évaporateur 3 et l'absorbeur 4, plus précisément sur la connexion fluidique 105 et sur une connexion fluidique 107 en sortie de l'évaporateur. Le sous-refroidisseur 6 permet de sous-refroidir le fluide frigorigène en entrée de l'évaporateur 3 et de préchauffer le fluide frigorigène à l'état de vapeur en sortie de l'évaporateur 3. Cet échangeur permet donc de réduire la taille du condenseur 2 et de l'évaporateur 3 et ainsi d'améliorer de manière notable les performances de la machine. La pertinence de ce composant est fonction des températures de fonctionnement, la taille de la machine et le coût des échangeurs.

Le système selon l'invention comprend en plus :

- Un évaporateur 3 configuré pour vaporiser le fluide frigorigène. L'évaporateur 3 est connecté fluidiquement au condenseur 2 et à l'absorbeur 4. L'évaporateur 3 est raccordé fluidiquement au condenseur 2, plus précisément à un détendeur 12, par une connexion fluidique 106. Préférentiellement, le détendeur est lui-même connecté fluidiquement en amont au sous-refroidisseur 6. La connexion fluidique 106 permet l'entrée du fluide frigorigène à l'état liquide dans l'évaporateur 3. L'évaporateur 3 est raccordé fluidiquement à l'absorbeur 4, plus précisément avantageusement avec le sous-refroidisseur 6, par une connexion fluidique 107, permettant la sortie de la vapeur de fluide frigorigène de l'évaporateur 3. L'évaporateur 3 comprend également une entrée et une sortie d'une source de chaleur 17. Le changement de phase du fluide frigorigène de l'état liquide à l'état vapeur s'accompagne d'une transmission de chaleur de la source chaude 17 au fluide frigorigène. La source chaude 17 transmet des calories et voit ainsi sa température s'abaisser. L'évaporateur 3 est le lieu de la production de frigories.

Le système selon l'invention comprend en plus :

- Un absorbeur 4 configuré pour condenser la vapeur de fluide frigorigène issue de l'évaporateur 3. L'absorbeur 4 est connecté fluidiquement à l'évaporateur 3 et au générateur 1. L'absorbeur est raccordé fluidiquement à l'évaporateur 3, plus précisément du sous-refroidisseur 6, par une connexion fluidique 115 permettant l'entrée du fluide frigorigène à l'état de vapeur dans l'absorbeur 4. L'absorbeur 4 et le générateur 1 sont connectés fluidiquement par la boucle de solution 11. L'absorbeur 4 est raccordé fluidiquement au générateur 1 par une connexion fluidique 108, plus précisément l'absorbeur 4 est raccordé fluidiquement avec une pompe 9 destinée à mettre en circulation la solution de travail dans le circuit de circulation fluidique, plus précisément une solution de travail dite riche sort de l'absorbeur 4 en direction du générateur 1 par la connexion fluidique 108. Avantageusement, la pompe 9 est connectée fluidiquement à un économiseur 8 au travers duquel la solution de travail dite riche est réchauffée avant d'être transmise au générateur 1. Avantageusement, l'économiseur 8 est un échangeur transmettant de la chaleur de la solution dite pauvre issue du générateur 1 vers la solution dite riche issue de l'absorbeur 4. L'absorbeur 4 est raccordé fluidiquement au générateur 1 par une connexion fluidique 103, plus précisément avec un détendeur 10. La connexion fluidique 103 permet l'entrée de la solution de travail dite pauvre issue du générateur 1 dans l'absorbeur 4. Le changement de phase du fluide frigorigène de l'état vapeur à l'état liquide s'accompagne d'une libération de chaleur qui est transmise à une source de refroidissement 18 tel qu'un flux d'air. L'air réchauffé est évacué du système.

Le système selon l'invention comprend en plus :

- Un compresseur réversible 5 configuré pour fonctionner, pendant l'opération du système, alternativement en compresseur actionné par un moteur ou en expanseur actionnant une génératrice. Les deux fonctions sont mises en oeuvres sur des périodes de temps définies et volontaires en fonction des besoins du système. Le compresseur réversible 5 est connecté fluidiquement au générateur 1 et à l'absorbeur 4. Le compresseur réversible 5 est raccordé fluidiquement au générateur 1 par une connexion fluidique 109 permettant l'entrée du fluide frigorigène à l'état de vapeur dans le compresseur réversible 5. Préférentiellement, un surchauffeur 7 est agencé sur la connexion fluidique 109 entre le générateur 1 et le compresseur réversible 5 pour permettre un échange thermique supplémentaire entre une source chaude 18 et le fluide de travail afin d'obtenir une vapeur de meilleure qualité à l'entrée du compresseur réversible 5 en mode expanseur. Le compresseur réversible 5 est raccordé fluidiquement à l'absorbeur 4 par une connexion fluidique 110 permettant la sortie du fluide frigorigène à l'état de vapeur détendue du compresseur réversible 5 vers l'absorbeur 4. Le compresseur réversible 5 est raccordé fluidiquement à l'évaporateur 3 par une connexion fluidique 111 permettant l'entrée du fluide frigorigène à l'état de vapeur dans le compresseur réversible 5. Le compresseur réversible 5 est raccordé fluidiquement à l'absorbeur 4 par une connexion fluidique 112 permettant la sortie du fluide frigorigène à l'état de vapeur comprimée du compresseur réversible 5 vers l'absorbeur 4.

    Selon une possibilité, le compresseur réversible de type turbomachine est un compresseur centrifuge - turbine centripète ou compresseur axial -turbine axiale.
    Selon une possibilité, le compresseur réversible 5 est relié mécaniquement à la pompe 9 de la boucle à solution de sorte à l'alimenter en énergie directement.

- Le compresseur réversible 5 en mode compresseur est alimenté en énergie par un moteur fournissant une puissance Wc. Dans ce mode, le compresseur réversible 5 a pour fonction de comprimer le fluide frigorigène le traversant de sorte à augmenter sa pression en entrée de l'absorbeur 4.

Le compresseur réversible 5 en mode expanseur est relié à une génératrice. Dans ce mode, le compresseur réversible 5 en mode expanseur a pour fonction de détendre le fluide frigorigène le traversant transformant l'énergie thermique en énergie mécanique. La génératrice permet de transformer l'énergie mécanique récupérée par l'expanseur en électricité en produisant une puissance électrique Wt. Avantageusement, le compresseur réversible 5 de type turbomachine est configuré pour permettre une production électrique supérieure à 100kWe c'est à dire de moyenne puissance voir de grande puissance de 1MWe.

Le système selon l'invention comprend un module de gestion de la circulation de la solution de travail. Le module de gestion est configuré pour définir les conditions de fonctionnement du système en fonction des besoins en énergie et des fluctuations des sources. Notamment lorsque de l'énergie thermique est souhaitée : froid, froid basse température, ou de l'énergie électrique, ou un mix d'énergie thermique : froid et d'énergie électrique, en fonction des températures des sources, du prix de l'électricité...

Le module de gestion comprend notamment des vannes de réglages et/ou au moins une vanne de détente avantageusement dont l'ouverture est réglable et/ou des moyens de réglages des débits de circulation de la solution de travail et du fluide frigorigène notamment par le contrôle de la vitesse de la pompe 9. Le système et le module de gestion selon l'invention présentent l'avantage d'être compactes en ne nécessitant avantageusement que peu de composants supplémentaires tels des vannes, éventuellement des capteurs de températures et de pression, ce qui réduit les coûts et l'encombrement permettant l'intégration du système selon l'invention dans le cadre d'application mobile.

Le système est configuré pour fonctionner dans au moins deux modes de fonctionnement.

Dans le premier mode de fonctionnement, le système produit soit de l'énergie thermique froide, soit de l'énergie électrique.

Une première condition est la demande de production de froid par la machine à absorption, la demande de production de froid peut être vérifiée par le module de gestion en fonction d'une commande binaire c'est-à-dire valeur de production de froid non nulle signifiant une demande de production de froid et une valeur de production de froid nulle signifiant une absence de demande de production de froid.

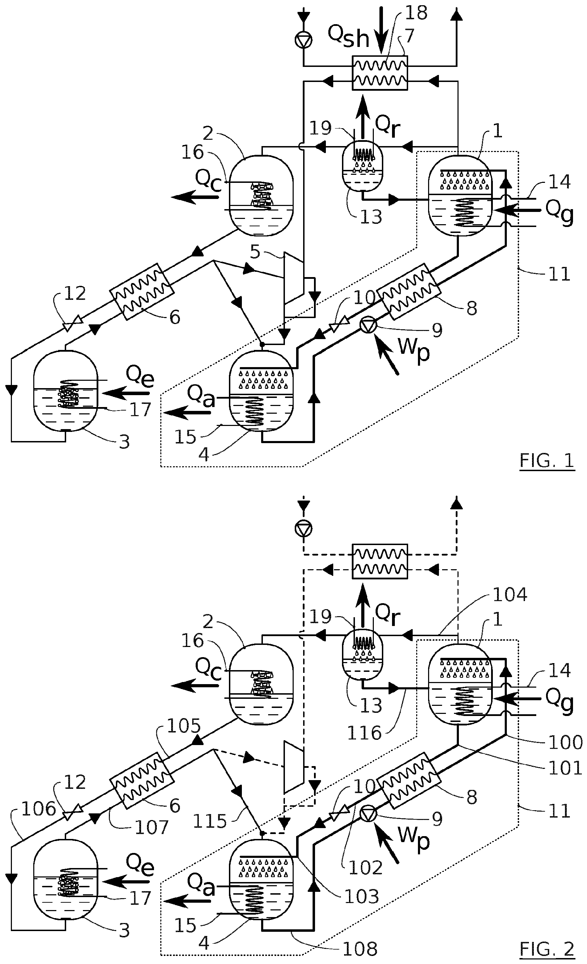

Dans le cas d'une demande de production de froid, le module de gestion de la circulation de la solution de travail va définir une circulation de la solution de travail suivant un cycle à absorption classique tel qu'illustré en figure 2. Cette fonction est dénommée fonction A. Selon l'invention, la production de froid se fait notamment à partir d'une source de chaleur basse température telle que la chaleur fatale, par exemple comprise entre 70°C et 150°C, pouvant être fluctuante, telle qu'une source solaire ou de chaleur fatale liée à la mise en route d'un moteur thermique ou de rejets industriels intermittents. Dans le cas, d'une source de chaleur fluctuante, avantageusement, un stockage de calories en amont du système de production peut être prévu.

Le fonctionnement du système selon la figure 2 est décrit ci-après. Le fluide frigorigène de la solution de travail sort du générateur 1 par la connexion fluidique 104 traverse avantageusement un rectifieur 13 avant d'arriver dans le condenseur 2. Le fluide frigorigène ressort du condenseur 2 par la connexion fluidique 105 pour traverse avantageusement le sous-refroidisseur 6, et avantageusement un détendeur 12, avant d'arriver par la connexion fluidique 106 dans l'évaporateur 3. Le fluide frigorigène quitte l'évaporateur 3 par la connexion fluidique 107 pour avantageusement traverser le sous-refroidisseur 6 avant d'arriver dans l'absorbeur 4 par la connexion fluidique 115. Le fluide frigorigène est absorbé par l'absorbant et la solution de travail dite riche ressort de l'absorbeur par la connexion fluidique 108 pour circuler dans la boucle de solution 11 comprenant l'économiseur 8, la pompe 9 et le détendeur 10. La boucle de solution 11 est décrite ci-après : la solution de travail dite riche traversant avantageusement successivement une pompe 9 et un économiseur 8 avant d'arriver dans le générateur 1 par la connexion fluidique 100. La solution de travail dite pauvre ressort du générateur 1 par la connexion fluidique 101 pour traverser avantageusement successivement l'économiseur 8 et un détendeur 10 avant d'arriver dans l'absorbeur 4. La production de froid se fait au niveau de l'évaporateur 3 lors de l'évaporation du fluide frigorigène qui s'accompagne d'un refroidissement de la source chaude 17. La source chaude 17 refroidie peut ensuite être utilisée par exemple pour de la climatisation.

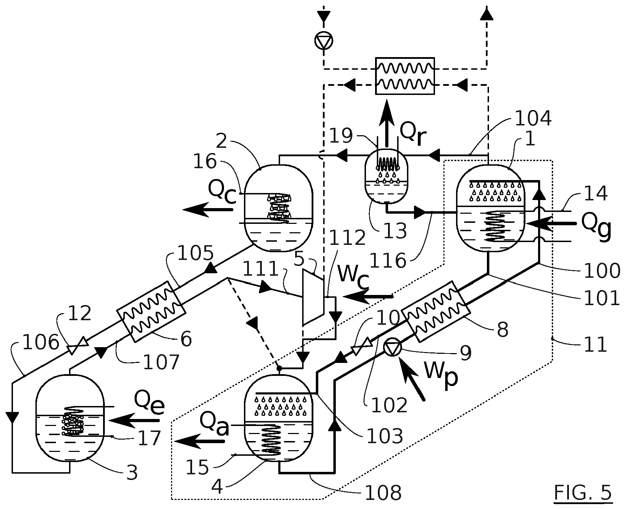

Dans le cas d'une demande de production de froid, soit en grande quantité, soit à très basse température, par exemple comprise entre -10°C et - 25°C, plus spécifiquement de l'ordre de -20°C, notamment à partir d'une source de chaleur basse température telle que la chaleur fatale, par exemple comprise entre 70°C et 150°C, pouvant être fluctuante, soit au moins en partie avec une source électrique dont le prix est attractif, le module de gestion de la circulation de la solution de travail va définir une circulation de la solution de travail suivant un cycle à absorption assisté par un compresseur 5 tel qu'illustré en figure 5. Cette fonction est dénommée fonction D.

Le cycle à absorption illustré en figure 5 fonctionne avec un niveau de pression supplémentaire par rapport à un cycle à absorption classique illustré en figure 2, entre le compresseur réversible 5 et l'absorbeur 4.

Le fonctionnement du système selon la figure 5 est décrit ci-après.

Le fluide frigorigène de la solution de travail sort du générateur 1 par la connexion fluidique 104 traverse avantageusement un rectifieur 13 avant d'arriver dans le condenseur 2. Le fluide frigorigène ressort du condenseur 2 par la connexion fluidique 105 pour traverser avantageusement le sous-refroidisseur 6 et un détendeur 12 avant d'arriver par la connexion fluidique 106 dans l'évaporateur 3. Le fluide frigorigène quitte l'évaporateur 3 par la connexion fluidique 107 pour avantageusement traverser le sous-refroidisseur 6. Le fluide frigorigène quitte le sous-refroidisseur 6 par une connexion fluidique 111 pour arriver dans le compresseur réversible 5 qui est en mode compresseur relié à un moteur fournissant un travail Wc assurant la compression du fluide frigorigène. Le fluide frigorigène comprimé ressort du compresseur réversible 5 par une connexion fluidique 112 débouchant dans l'absorbeur 4. Le fluide frigorigène est absorbé par l'absorbant et la solution de travail dite riche ressort de l'absorbeur 4 pour traverser la boucle de solution 11 telle que décrite en référence à la figure 2 avant de retourner au niveau de générateur 1. Le compresseur 5 augmente ainsi le différentiel de pression entre la partie du cycle à basse pression et la partie du cycle à haute pression. La production de froid est ainsi plus importante au niveau de l'évaporateur 3. La source chaude 17 refroidie peut être utilisée par exemple pour de la réfrigération.

Une deuxième condition est la demande de production d'électricité par le système, la demande de production d'électricité peut être vérifiée par le module de gestion en fonction d'une commande binaire c'est-à-dire valeur de production d'électricité non nulle signifiant une demande de production d'électricité et une valeur de production d'électricité nulle signifiant une absence de demande de production d'électricité.

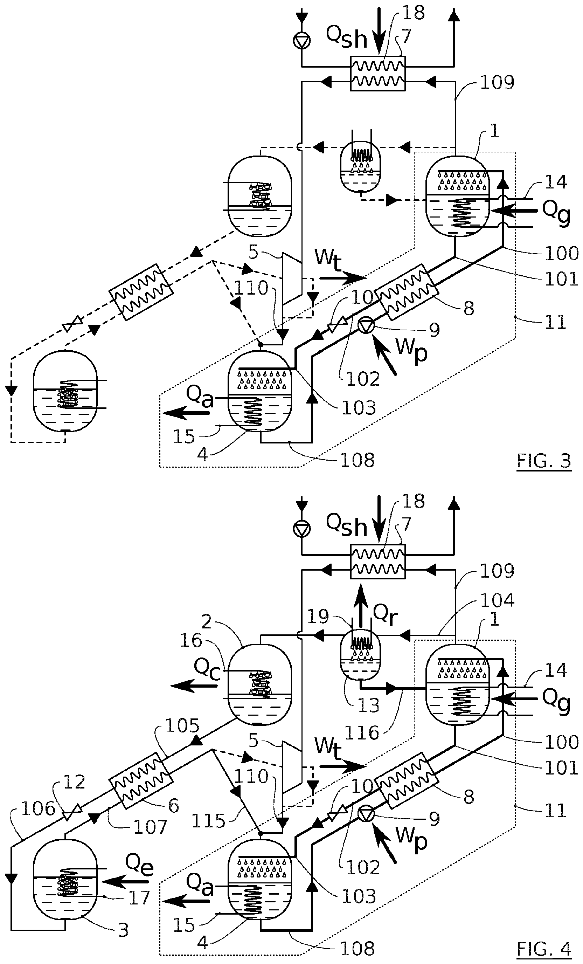

Dans le cas d'une demande de production d'électricité, notamment à partir d'une source de chaleur basse température telle que la chaleur fatale par exemple comprise entre 70°C et 150°C pouvant être fluctuante, le module de gestion de la circulation de la solution de travail va définir une circulation de la solution de travail tel qu'illustrée en figure 3. Le cycle de circulation de la solution de travail s'apparente à un cycle de Rankine, plus spécifiquement à un cycle de Kalina.

Le fonctionnement du système selon la figure 3 est décrit ci-après. Cette fonction est dénommée fonction B. Le fluide frigorigène de la solution de travail sort du générateur 1 par la connexion fluidique 109 et traverse avantageusement un surchauffeur 7 avant d'arriver dans le compresseur réversible 5. Le fluide frigorigène ressort du compresseur réversible 5 par la connexion fluidique 110 débouchant dans l'absorbeur 4. Le fluide frigorigène est absorbé par l'absorbant et la solution de travail dite riche ressort de l'absorbeur 4 pour traverser la boucle de solution 11 telle que décrite en référence à la figure 2 avant de retourner au niveau de générateur 1. L'électricité est produite par le compresseur réversible en mode expanseur relié à une génératrice électrique.

Dans le deuxième mode de fonctionnement, le système produit simultanément de l'énergie thermique froide et de l'énergie électrique. Dans ce mode de fonctionnement, l'énergie thermique produite est du froid.

Dans le cas d'une demande de production concomitante d'électricité et de froid, notamment d'une source de chaleur basse température telle que la chaleur fatale par exemple comprise entre 70°C et 150°C pouvant être fluctuante, le module de gestion de la circulation de la solution de travail va définir une circulation de la solution de travail suivant un cycle à absorption et un cycle de production d'électricité tel qu'illustré en figure 4. Les deux fonctions décrites ci-dessus en référence aux figures 2 et 3 sont combinées dans ce mode de fonctionnement. Cette fonction est dénommée fonction C. Le système selon l'invention est configuré pour assurer un fonctionnement en parallèle de la production d'électricité et de la production de froid ce qui permet de moduler en fonction des besoins la proportion d'électricité produite et de froid produit.

Le fonctionnement du système selon la figure 4 est décrit ci-après. A la sortie du générateur 1, le fluide frigorigène de la solution de travail est orienté partiellement vers un cycle de production de froid et partiellement vers un cycle de production d'électricité. Le compresseur réversible 5 est agencé entre le générateur 1 et l'absorbeur 4 en parallèle du condenseur 2 et de l'évaporateur 3. Une partie du fluide frigorigène en sortie du générateur est dérivé vers le compresseur réversible 5 tandis que l'autre partie circule vers le condenseur 2.

Le fluide frigorigène passant par la connexion fluidique 104 traverse avantageusement un rectifieur 13 avant d'arriver dans le condenseur 2. Le fluide frigorigène ressort du condenseur 2 par la connexion fluidique 105 pour traverser avantageusement le sous-refroidisseur 6 et avantageusement un détendeur 12 avant d'arriver par la connexion fluidique 106 dans l'évaporateur 3. Le fluide frigorigène quitte l'évaporateur par la connexion fluidique 107 pour avantageusement traverser le sous-refroidisseur 6 avant d'arriver dans l'absorbeur 4 par la connexion fluidique 115. Le fluide frigorigène est absorbé par l'absorbant et la solution de travail dite riche ressort de l'absorbeur par la connexion fluidique 108 pour circuler dans la boucle de solution 11 comprenant l'économiseur 8, la pompe 9 et le détendeur 10. La boucle de solution 11 est décrite ci-après, la solution de travail dite riche traversant avantageusement successivement une pompe 9 et un économiseur 8 avant d'arriver dans le générateur 1 par la connexion fluidique 100. La solution de travail dite pauvre ressort du générateur 1 par la connexion fluidique 101 pour traverser avantageusement successivement l'économiseur 8 et un détendeur 10 avant d'arriver dans l'absorbeur 4.

Le fluide frigorigène passant par la connexion fluidique 109 traverse avantageusement un surchauffeur 7 avant d'arriver au compresseur réversible 5 fonctionnant en mode compresseur. Le fluide frigorigène ressort du compresseur 5 comprimé par la connexion fluidique 110 débouchant dans l'absorbeur 4. Au niveau de l'absorbeur, le fluide frigorigène en provenance du compresseur 5 et le fluide frigorigène en provenance de l'évaporateur 3 sont réunis pour traverser la boucle de solution 11. Le fluide frigorigène est absorbé par l'absorbant et la solution de travail dite riche ressort de l'absorbeur par la connexion fluidique 108 pour circuler dans la boucle de solution 11 comprenant l'économiseur 8, la pompe 9 et le détendeur 10 telle que décrite en ci-dessus.

Selon une possibilité (non représentée), le fluide frigorigène est orienté en sortie du générateur 1 vers le rectifieur 13 avant d'être divisé en deux flux respectivement vers le condenseur 2 par une portion de la connexion fluidique 104 et vers le compresseur réversible 5 , avantageusement en passant préalablement par le surchauffeur 7, par une portion de la connexion fluidique 109.La production de froid se fait au niveau de l'évaporateur 3 lors de l'évaporation du fluide frigorigène qui s'accompagne d'un refroidissement de la source chaude 17. La source chaude 17 refroidie peut ensuite être utilisée par exemple pour de la climatisation. L'électricité est produite par le compresseur réversible 5 en mode expanseur relié à une génératrice électrique.

Selon un mode de réalisation, le système comprend au moins un module de stockage de frigories associé à l'évaporateur 3. Le stockage de frigories permet ainsi un stockage d'énergie lorsque la source et le besoin ne sont pas concomitants. Les frigories stockées peuvent être déstockées sous forme de froid ou bien sous forme d'électricité en fonction des besoins. Le module de stockage de frigories peut être un système de stockage thermique par Matériau à Changement de Phase ou bien directement un stockage de fluide froid. Le module de stockage de frigories est associé à l'évaporateur 3 pour stocker des frigories lors du fonctionnement pour la production de froid. Avantageusement, le module de stockage de frigories est également associé à l'absorbeur 4 pour déstocker des frigories vers l'absorbeur 4 lorsqu'une source de refroidissement 15 est souhaitée, c'est-à-dire notamment dans les différents modes de fonctionnement.

Selon un mode de réalisation, le système comprend au moins un module de stockage d'électricité associé à au compresseur réversible 5 et plus spécifiquement à la génératrice électrique associée au compresseur réversible 5. Le stockage d'électricité permet ainsi un stockage d'énergie lorsque la source et le besoin ne sont pas concomitants. L'électricité stockée peut être déstockée sous forme de froid ou bien sous forme d'électricité en fonction des besoins. À titre d'exemple des batteries électriques sont prévues.

Exemple 1

Un exemple de configuration détaillée est fourni ci-après avec pour chaque composant du système, la configuration type :

- Générateur 1-Température source chaude : 110°C
- Rectifieur 13-Taux de rectification : 0,5
- Surchauffeur 7-Température à l'entrée de l'expanseur (fonctions B et C) : 130°C
- Condenseur 2-Température source intermédiaire : 27°C
- Evaporateur 3- Surchauffe : 5°C - Température source froide (figures 2 et 4) : 18° C - Température source froide (figure 5) : variable
- Absorbeur 4-Température source intermédiaire : 27°C
- Pompe 9-Débit 100 kg/h, Rendement : 80 %
- Compresseur 5 / Expanseur - Rendement : 50 %

Pour la production de froid (fonctions A et C) le COP est défini par l'équation (1).

$$COP = \frac{Q_{froid}}{Q_{chaud} + W_{pompe}} \quad (1)$$

Q$_{chaud}$ étant la puissance Qg délivrée par la source thermique, en particulier par la source de chaleur 14 au niveau du générateur 1, sous forme de chaleur et Wpompe la puissance électrique consommée par la pompe 9.

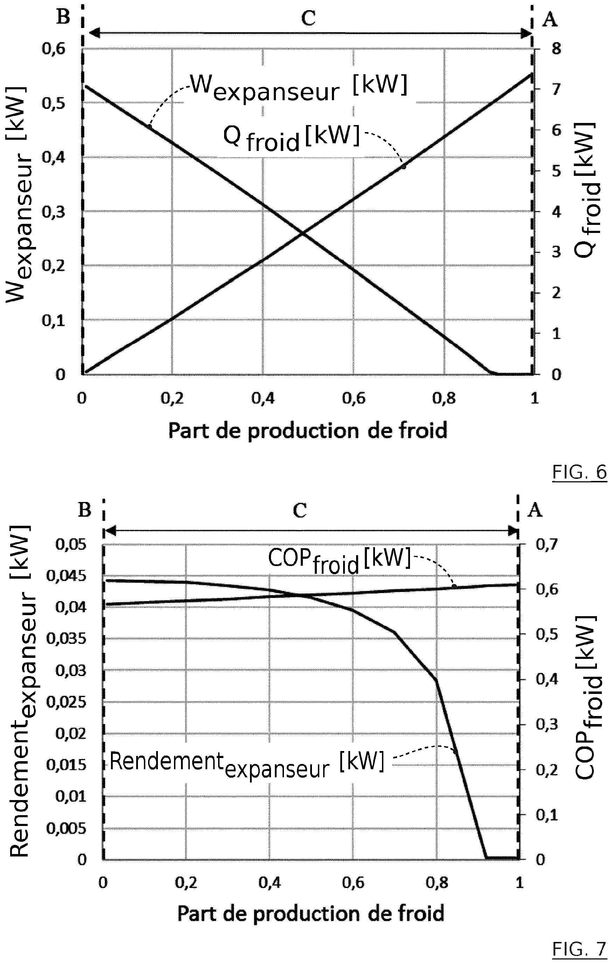

Les figures 6 et 7 illustrent les performances qu'il est possible d'atteindre avec cette configuration type pour les modes de fonctionnement illustrés aux figures 2 à 4 (fonction A, B, C).

Pour la production de froid basse température, illustré à la figure 5, le COP est défini par l'équation (2).

$$COP = \frac{Q_{chaud}}{W_{compresseur} + W_{pompe}} \quad (2)$$

W$_{compresseur}$ étant la puissance électrique Wc consommée par le compresseur.

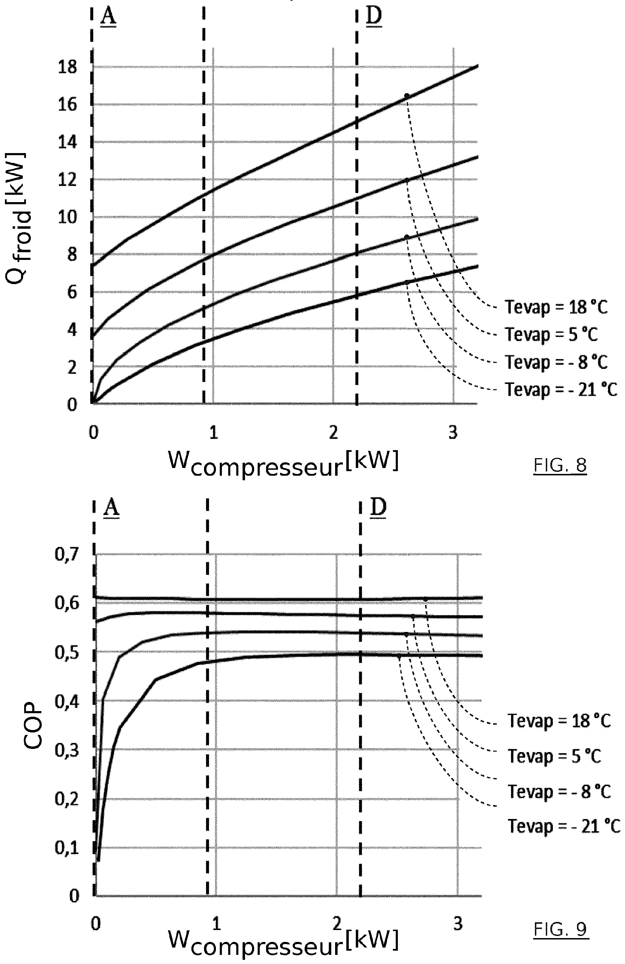

Les figures 8 et 9 illustrent les performances qu'il est possible d'atteindre avec la même configuration type dans les modes de fonctionnement illustrés aux figures 2 et 5, fonction A et D.

On notera que sans l'utilisation du compresseur (fonctionnement de la figure 2), il existe une température limite de froid productible (située ici entre 5°C et -8°C).

L'utilisation du compresseur (fonctionnement de la figure 4) permet la production de froid à plus faible température ( de -10°C à -25°C , ici, -8°C et -21°C) pour toutes les températures, ainsi que d'augmenter la production de froid sans dégradation du COP.

L'invention n'est pas limitée aux modes de réalisations précédemment décrits et s'étend à tous les modes de réalisation couverts par les revendications.

### REFERENCES

1  Générateur
2  Condenseur
3  Evaporateur
4  Absorbeur
5  Compresseur réversible
6  Sous-refroidisseur
7  Surchauffeur
8  Economiseur
9  Pompe à solution
10  Détendeur
11  Boucle de solution
12  Détendeur
13  Rectifieur
14  Source chaude
15  Source de refroidissement
16  Flux d'air
17  Source chaude
18  Source froide
19  Source froide
100  Connexion fluidique entre l'économiseur et le générateur
101  Connexion fluidique entre le générateur et l'économiseur
102  Connexion fluidique entre l'économiseur et le détendeur
103  Connexion fluidique entre le détendeur et l'absorbeur
104  Connexion fluidique entre le générateur et le condenseur
105  Connexion fluidique entre le condenseur et le sous-refroidisseur
106  Connexion fluidique entre le sous-refroidisseur et l'évaporateur
107  Connexion fluidique entre l'évaporateur et le sous-refroidisseur
108  Connexion fluidique entre l'absorbeur et l'économiseur
109  Connexion fluidique entre le générateur et le compresseur réversible en mode expanseur
110  Connexion fluidique entre le compresseur réversible et l'absorbeur
111  Connexion fluidique entre le sous-refroidisseur et le compresseur réversible en mode expanseur
112  Connexion fluidique entre le compresseur réversible en mode compresseur et l'absorbeur
115  Connexion fluidique entre le sous-refroidisseur et l'absorbeur
116  Connexion fluidique entre le rectifieur et le générateur

Qg  Puissance générateur
Qc  Puissance condenseur
Qe  Puissance évaporateur
Qa  Puissance absorbeur
Qr  Puissance rectifieur
Qsh  Puissance surchauffeur
Wc  Travail compresseur
Wt  Travail détendeur

### Revendications

1. Système de production d'énergie thermique et d'énergie électrique comprenant un dispositif à absorption comprenant un absorbeur (4), un générateur (1), un condenseur(2), un évaporateur(3) et un circuit fluidique d'absorption (100) apte à recevoir une solution de travail comprenant un fluide frigorigène et un absorbant, le circuit fluidique (100) reliant le générateur (1) au condenseur (2), le condenseur (2) à l'évaporateur (3), l'évaporateur (3) à l'absorbeur (4) et l'absorbeur (4) au générateur (1)

**Caractérisé en ce que** le système comprend également :

- Un compresseur réversible (5) agencé sur le circuit fluidique (100) entre le générateur (1) et l'absorbeur (4), en dérivation du condenseur (2) et de l'évaporateur (3), le circuit fluidique comprenant également une première connexion fluidique (111) agencée pour assurer la connexion fluidique entre l'évaporateur (3) et le compresseur réversible (5) et une deuxième connexion fluidique (110, 112) pour assurer la connexion fluidique entre le compresseur réversible (5) et l'absorbeur (4), le compresseur réversible (5) étant configuré pour fonctionner, pendant l'opération du système, alternativement en mode compresseur actionné par un moteur ou en mode expanseur actionnant une génératrice configurée pour produire de l'électricité, le compresseur réversible (5) étant une turbomachine,
- Un module de gestion de la circulation de la solution de travail dans le circuit fluidique de sorte à assurer dans un premier mode de fonctionnement une production d'énergie électrique alternativement avec une production d'énergie thermique froide, et dans un deuxième mode de fonctionnement pour assurer la production d'énergie électrique simultanément à la production de froid.

2. Système selon la revendication précédente dans lequel la solution de travail comprend comme fluide réfrigérant de l'ammoniac ($NH_3$) et comme absorbant ($H_2O$).

3. Système selon l'une quelconque des revendications précédentes comprenant au moins un module de stockage de frigories associé à l'évaporateur (3).

4. Système selon l'une quelconque des revendications précédentes comprenant au moins un module de stockage de calories associé à l'absorbeur (4).

5. Système selon l'une quelconque des revendications précédentes comprenant au moins un module de stockage d'électricité associé au compresseur réversible (5).

6. Procédé de production d'énergie électrique et d'énergie thermique par un système selon l'une quelconque des revendications précédentes **caractérisé en ce qu'**il comprend

- dans le premier mode de fonctionnement alternativement :

  ∘ une production d'énergie thermique froide par la circulation de la solution de travail dans le circuit fluidique (100) successivement au travers du générateur (1), du condenseur (2), de l'évaporateur(3), de l'absorbeur (4) puis à nouveau dans le générateur (1), ou une production d'énergie thermique froide très basse température par une circulation de la solution de travail dans le circuit fluidique successivement au travers du générateur (1), du condenseur (2), de l'évaporateur (3), du compresseur réversible (5) en mode compresseur, de l'absorbeur (4) puis à nouveau dans le générateur (1), ou
∘ une production d'énergie électrique qui se fait par une circulation de la solution de travail dans le circuit fluidique (100) successivement au travers du générateur (1), du compresseur réversible (5) en mode expanseur associé à une génératrice électrique, de l'absorbeur (4) puis à nouveau dans le générateur (1), ou

- dans le deuxième mode de fonctionnement simultanément :

  ∘ La production d'énergie thermique froide, qui se fait par la circulation de la solution de travail dans le circuit fluidique (100) successivement au travers du générateur (1), du condenseur (2), de l'évaporateur(3), de l'absorbeur (4) puis à nouveau dans le générateur (1), et
  ∘ La production d'énergie électrique qui se fait par la circulation de la solution de travail dans le circuit fluidique (100) successivement au travers du générateur (1), du compresseur réversible (5) en mode expanseur associé à une génératrice électrique, de l'absorbeur (4) puis à nouveau dans le générateur (1).

7. Procédé selon la revendication précédente dans lequel la température de l'énergie thermique froide produite est comprise entre -10°C et - 25°C ou -10°C et 20°C.

8. Procédé selon l'une quelconque des revendications 6 à 7 comprenant une source de chaleur comprenant de la chaleur basse température avantageusement comprise entre 70°C et 150°C.

9. Utilisation d'un système de production d'énergie thermique et d'énergie électrique selon l'une quelconque des revendications 1 à 5 pour une production électrique d'une puissance supérieure à 100 kWe.

**Patentansprüche**

1. System zum Erzeugen von thermischer und elektrischer Energie, das eine Absorptionsvorrichtung umfasst, die einen Absorber (4), einen Generator (1), einen Kondensator (2), einen Verdampfer (3) und einen Absorptionsfluidkreislauf (100) umfasst, der dazu ausgelegt ist, eine Arbeitslösung aufzunehmen, die ein Kühlmittel und ein Absorptionsmittel umfasst, wobei der Fluidkreislauf (100) den Generator (1) mit dem Kondensator (2), den Kondensator (2) mit dem Verdampfer (3), den Verdampfer (3) mit dem Absorber (4) und den Absorber (4) mit dem Generator (1) verbindet, **dadurch gekennzeichnet, dass** das System außerdem Folgendes umfasst:

   - einen reversiblen Kompressor (5), der im Fluidkreislauf (100) zwischen dem Generator (1) und dem Absorber (4) unter Umgehung des Kondensators (2) und des Verdampfers (3) angeordnet ist, wobei der Fluidkreislauf außerdem eine erste Fluidverbindung (111), die angeordnet ist, um die Fluidverbindung zwischen dem Verdampfer (3) und dem reversiblen Kompressor (5) sicherzustellen, und eine zweite Fluidverbindung (110, 112) umfasst, um die Fluidverbindung zwischen dem reversiblen Kompressor (5) und dem Absorber (4) sicherzustellen, wobei der reversible Kompressor (5) dazu konfiguriert ist, während des Betriebs des Systems abwechselnd im von einem Motor betriebenen Kompressormodus oder im Expansionsmodus, der einen Stromerzeuger betreibt, der dazu konfiguriert ist, Strom zu erzeugen, zu arbeiten, wobei der reversible Kompressor (5) eine Turbomaschine ist,
   - ein Steuermodul für die Zirkulation der Arbeitslösung im Fluidkreislauf in einem ersten Betriebsmodus, um eine Erzeugung von elektrischer Energie abwechselnd mit einer Erzeugung von Kälte oder Wärme sicherzustellen, und in einem zweiten Betriebsmodus, um die Erzeugung von elektrischer Energie gleichzeitig bei der Erzeugung von Kälte sicherzustellen.

2. System nach dem vorhergehenden Anspruch, wobei die Arbeitslösung Ammoniak ($NH_3$) als Kühlfluid und Wasser ($H_2O$) als Absorptionsmittel umfasst.

3. System nach einem der vorhergehenden Ansprüche, das mindestens ein Kältespeichermodul umfasst, das mit dem Verdampfer (3) verbunden ist.

4. System nach einem der vorhergehenden Ansprüche, das mindestens ein Kalorienspeichermodul umfasst, das mit dem Absorber (4) verbunden ist.

5. System nach einem der vorhergehenden Ansprüche, das mindestens ein Stromspeichermodul umfasst, das mit dem reversiblen Kompressor (5) verbunden ist.

6. Verfahren zum Erzeugen von elektrischer Energie und thermischer Energie durch ein System nach einem der vorhergehenden Ansprüche, **dadurch gekennzeichnet, dass** es Folgendes umfasst

   - im ersten Betriebsmodus abwechselnd:

      ◦ eine Erzeugung von kalter thermischer Energie durch die Zirkulation der Arbeitslösung im Fluidkreislauf (100) nacheinander durch den Generator (1), den Kondensator (2), den Verdampfer (3), den Absorber (4) und dann wieder durch den Generator (1), oder eine Erzeugung von kalter thermischer Energie mit einer sehr niedrigen Temperatur durch eine Zirkulation der Arbeitslösung im Fluidkreislauf nacheinander durch den Generator (1), den Kondensator (2), den Verdampfer (3), den im Kompressormodus arbeitenden reversiblen Kompressor (5), den Absorber (4) und dann wieder durch den Generator (1), oder
      ◦ eine Erzeugung von elektrischer Energie, die durch eine Zirkulation der Arbeitslösung im Fluidkreislauf (100) nacheinander durch den Generator (1), den reversiblen Kompressor (5) im Expansionsmodus, der mit einem Stromerzeuger verbunden ist, den Absorber (4) und dann wieder durch den Generator (1) erfolgt, oder

   - im zweiten Betriebsmodus gleichzeitig:

      ◦ die Erzeugung von kalter thermischer Energie, die durch die Zirkulation der Arbeitslösung im Fluidkreislauf (100) nacheinander durch den Generator (1), den Kondensator (2), den Verdampfer (3), den Absorber (4) und dann wieder durch den Generator (1) erfolgt, und
      ◦ die Erzeugung von elektrischer Energie, die durch die Zirkulation der Arbeitslösung im Fluidkreislauf (100) nacheinander durch den Generator (1), den reversiblen Kompressor (5) im Expansionsmodus, der mit einem Stromerzeuger verbunden ist, den Absorber (4) und dann wieder durch den Generator (1) erfolgt.

7. Verfahren nach dem vorhergehenden Anspruch, wobei die Temperatur der erzeugten kalten thermischen Energie zwischen -10°C und -25°C oder -10°C und 20°C liegt.

8. Verfahren nach einem der Ansprüche 6 bis 7, das eine Wärmequelle mit Niedertemperaturwärme, vorteilhafterweise zwischen 70°C und 150°C, umfasst.

9. Verwendung eines Systems zum Erzeugen von thermischer und elektrischer Energie nach einem der Ansprüche 1 bis 5 zur Stromerzeugung mit einer Leistung von mehr als 100 kWe.

**Claims**

1. A system for producing thermal energy and electrical energy comprising an absorption device comprising an absorber (4), a generator (1), a condenser (2), an evaporator (3) and an absorption fluid circuit (100) capable of receiving a working solution comprising a refrigerant and an absorbent, the fluid circuit (100) connecting the generator (1) to the condenser (2), the condenser (2) to the evaporator (3), the evaporator (3) to the absorber (4) and the absorber (4) to the generator (1)
**Characterised in that** the system also comprises:

   - A reversible compressor (5) arranged on the fluid circuit (100) between the generator (1) and the absorber (4), bypassing the condenser (2) and the evaporator (3), the fluid circuit also comprising a first fluid connection (111) arranged to ensure the fluid connection between the evaporator (3) and the reversible compressor (5) and a second fluid connection (110, 112) to ensure the fluid connection between the reversible compressor (5) and the absorber (4), the reversible compressor (5) being configured to operate, during the operation of the system, alternately in compressor mode actuated by a motor or in expander mode actuating a generator configured to produce electricity, the reversible compressor (5) being a turbomachine,
   - A module for managing the circulation of the working solution in the fluid circuit so as to ensure, in a first mode of operation, a production of electrical energy alternately with a production of cold thermal energy, and in a second mode of operation, to ensure the production of electrical energy simultaneously with the production of cold.

2. The system according to the preceding claim, wherein the working solution comprises ammonia ($NH_3$) as refrigerant fluid and ($H_2O$) as absorbent.

3. The system according to any one of the preceding claims, comprising at least one frigorie storage module associated with the evaporator (3).

4. The system according to any one of the preceding claims, comprising at least one calorie storage module associated with the absorber (4).

5. The system according to any one of the preceding claims, comprising at least one electricity storage module associated with the reversible compressor (5).

6. A method for producing electrical energy and thermal energy by a system according to any one of the preceding claims, **characterised in that** it comprises

   - in the first mode of operation alternately:

     ○ a production of cold thermal energy by the circulation of the working solution in the fluid circuit (100) successively through the generator (1), the condenser (2), the evaporator (3), the absorber (4) then again in the generator (1), or a production of very low temperature cold thermal energy by a circulation of the working solution in the fluid circuit successively through the generator (1), the condenser (2), the evaporator (3), the reversible compressor (5) in compressor mode, the absorber (4) then again in the generator (1), or
     ○ a production of electrical energy which is done by a circulation of the working solution in the fluid circuit (100) successively through the generator (1), the reversible compressor (5) in expander mode associated with an electric generator, the absorber (4) then again in the generator (1), or

   - in the second mode of operation simultaneously:

     ○ The production of cold thermal energy, which is done by the circulation of the working solution in the fluid circuit (100) successively through the generator (1), the condenser (2), the evaporator (3), the absorber (4) then again in the generator (1), and
     ○ The production of electrical energy which is done by the circulation of the working solution in the fluid circuit (100) successively through the generator (1), the reversible compressor (5) in expander mode associated with an electric generator, the absorber (4) then again in the generator (1).

7. The method according to the preceding claim, wherein the temperature of the produced cold thermal energy is comprised between -10°C and -25°C or -10°C and 20°C.

8. The method according to any one of claims 6 to 7, comprising a heat source comprising low temperature heat which is advantageously comprised between 70°C and 150°C.

9. A use of a system for producing thermal energy and electrical energy according to any one of claims 1 to 5, for an electrical production with a power which is greater than 100 kWe.

FIG. 1

FIG. 2

FIG. 3

FIG. 4

FIG. 5

FIG. 6

FIG. 7

FIG. 8

FIG. 9

**EP 3 748 137 B1**

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- AT 511823 A4
- US 2005086971 A
- DE 102006060836

**Littérature non-brevet citée dans la description**

- **GOKMEN DEMIRKAYA ; RICARDO VASQUEZ PADILLA ; ARMANDO FONTALVO ; YEE YAN LIM.** Thermal and Exergetic Analysis of the Goswami Cycle Integrated with Mid-Grade Heat Sources. *Entropy,* Août 2017, vol. 19 (8), 416
- **WU et al.** A novel internally hybrid absorption-compression heat pump for performance improvement. *Energy Conversion and Management,* 15 Juillet 2018, vol. 168, 237-251